# EUROPÄISCHE PATENTANMELDUNG

(11) **EP 1 396 521 A1**
(43) Veröffentlichungstag der Anmeldung: **10.03.2004**
(21) Anmeldenummer: 03018724.9
(22) Anmeldetag: 26.08.2003
(51) Int. Cl.: C08K 5/5313, C08J 3/12

(54) **Staubarme, pulverförmige Flammschutzmittelzusammensetzung, Verfahren zu deren Herstellung und deren Verwendung, sowie flammgeschützte Polymerformmassen**

(30) Priorität: 06.09.2002 DE 10241374
(71) Anmelder: Clariant GmbH, 65929 Frankfurt am Main (DE)
(72) Erfinder: Bauer, Harald, Dr., 50170 Kerpen (DE); Hörold, Sebastian, Dr., 86420 Diedorf (DE); Krause, Werner, Dr., 50354 Hürth (DE); Sicken, Martin, Dr., 51149 Köln (DE)
(74) Vertreter: Paczkowski, Marcus, Dr.

(57) **Zusammenfassung**

Die Erfindung betrifft eine staubarme, pulverförmige Flammschutzmittelzusammensetzung aus einer phosphororganischer Flammschutzkomponente und mindestens einem Staubreduktionsadditiv, ein Verfahren zur Herstellung solcher Flammschutzmittelzusammensetzungen und Polymer-Formmassen, die solche Flammschutzmittelzusammensetzungen enthalten.

## Beschreibung

Die vorliegende Erfindung betrifft eine staubarme, pulverförmige Flammschutzmittelzusammensetzung aus einer phosphororganischen Flammschutzkomponente und mindestens einem Staubreduktionsadditiv, ein Verfahren zur Herstellung dieser staubarmen, pulverförmigen Flammschutzmittelzusammensetzung sowie polymere Formmassen und Formkörper, die eine solche staubarme, pulverförmige Flammschutzmittelzusammensetzung enthalten.

Phosphororganische Verbindungen finden Anwendung als Flammschutzmittel für thermoplastische Kunststoffe wie z. B. Polyamide oder Polyester.

In den vorgenannten Anwendungsgebieten kann die Verarbeitung der phosphororganischen Flammschutzkomponente auf Grund ihrer Neigung zur Staubentwicklung erschwert sein.

Die Neigung zur Staubentwicklung ist nachteilig beim Umfüllen des Feststoffes, führt zum Entweichen des Stoffes in die Umwelt, zur Verschmutzung von technischen Anlagen und kann im Extremfall zu Staubexplosionen führen.

Es bestand somit die Aufgabe, die Neigung von Flammschutzmittelzusammensetzungen zur Staubbildung zu vermindern und die Rieselfähigkeit solcher Flammschutzmittelzusammensetzungen zu erhalten bzw. zu verbessern.

Die Aufgabe wird gelöst durch eine staubarme, pulverförmige Flammschutzmittelzusammensetzung aus einer phosphororganischen Flammschutzkomponente und mindestens einem Staubreduktionsadditiv.

Überraschenderweise wurde nun gefunden, dass durch Zusatz eines Staubreduktionsadditivs die Neigung zur Staubbildung wirksam reduziert wird und gleichzeitig die Rieseifähigkeit erhalten bzw. verbessert werden kann.

Bevorzugt handelt es sich bei der phosphororganischen Flammschutzkomponente um ein Phosphinsäuresalz der Formel (I) und/oder ein Diphosphinsäuresalz der Formel (II) und/oder deren Polymere (Komponente A), 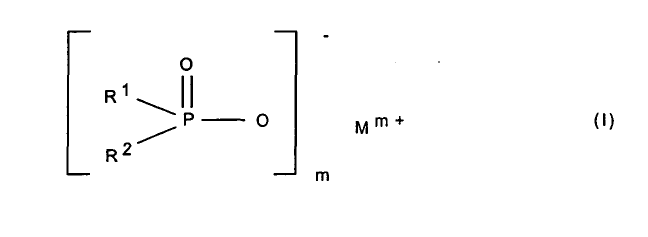 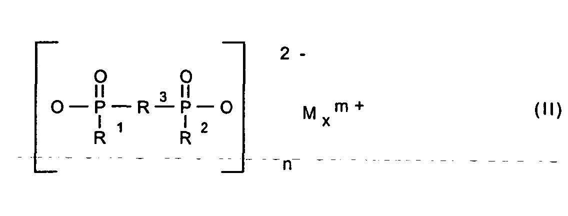 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder - Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methylphenylen, Ethylphenylen, tert.-Butylphenylen, Methylnaphthylen, Ethylnaphthylen oder tert.-Butylnaphthylen.

Bevorzugt bedeutet R³ auch Phenylmethylen, Phenylethylen, Phenylpropylen oder Phenylbutylen.

Bevorzugt enthält die staubarme, pulverförmige Flammschutzmittelzusammensetzung und/oder die phosphororganische Flammschutzkomponente weiterhin Melaminphosphat, Dimelaminphosphat, Melaminpyrophosphat, Melaminpolyphosphate, Melampolyphosphate, Melempolyphosphate und/oder Melonpolyphosphate.

Bevorzugt enthält die staubarme, pulverförmige Flammschutzmittelzusammensetzung und/oder die phosphororganische Flammschutzkomponente weiterhin Melaminkondensationsprodukte wie Melam, Melem und/oder Melon.

Geeignet sind Kondensationsprodukte des Melamins oder Umsetzungsprodukte des Melamins mit Phosphorsäure bzw. Umsetzungsprodukte von Kondensationsprodukten des Melamins mit Phosphorsäure sowie Gemische der genannten Produkte. Kondensationsprodukte des Melamins sind z.B. Melem, Melam oder Melon bzw. höher kondensierte Verbindungen dieses Typs sowie Gemische derselben und können z.B. durch ein Verfahren hergestellt werden, wie es in der WO-A-96/16948 beschrieben ist.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze, wie sie z.B. in der PCT/WO 98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog PCT/WO 98/45364 hergestellt werden durch die Umsetzung von Polyphosphorsäure und Melamin bzw. analog PCT/WO 98/08898 durch die Kondensation von Melaminphosphat bzw. Melaminpyrophosphat.

Bevorzugt enthält die staubarme, pulverförmige Flammschutzmittelzusammensetzung und/oder die phosphororganische Flammschutzkomponente weiterhin oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin.

Bevorzugt enthält die staubarme, pulverförmige Flammschutzmittelzusammensetzung und/oder die phosphororganische Flammschutzkomponente stickstoffhaltige Phosphate der Formeln (NH₄)_{y} H_{3-y} PO₄ bzw. (NH₄ PO₃)_{z}, mit y gleich 1 bis 3 und z gleich 1 bis 10.000

Bevorzugt enthält die staubarme, pulverförmige Flammschutzmittelzusammensetzung und/oder die phosphororganische Flammschutzkomponente als Komponente B eine synthetische anorganische Verbindung und/oder ein mineralisches Produkt.

Bevorzugt handelt es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Besonders bevorzugt handelt es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthält die staubarme, pulverförmige Flammschutzmittelzusammensetzung und/oder die phosphororganische Flammschutzkomponente als weitere Komponente C Stickstoffverbindungen.

Bevorzugt handelt es sich bei den Stickstoffverbindungen um solche der Formeln (III) bis (VIII) oder Gemische davon 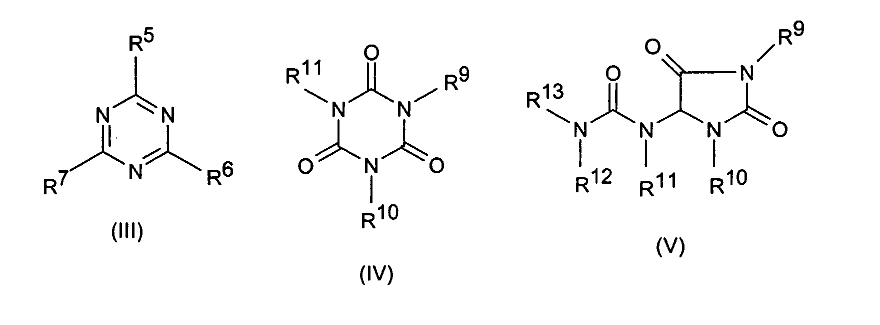 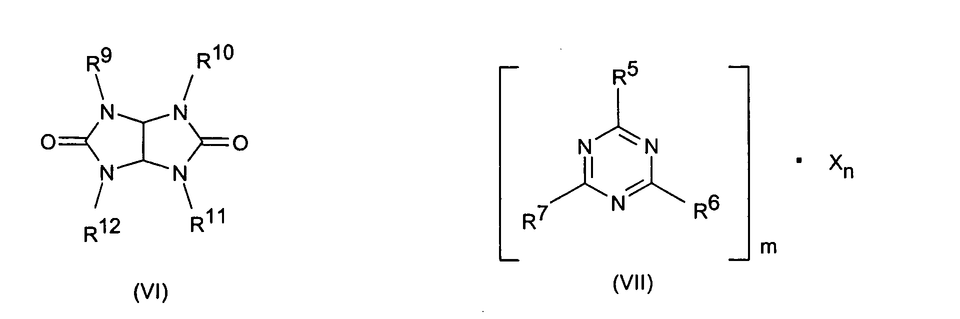 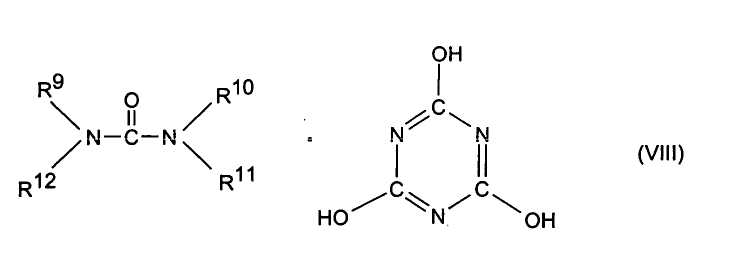 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder - Arylalkyl, -OR⁸ und -N(R⁸)R⁹, sowie N-alicyclisch oder N-aromatisch,
- R⁸: Wasserstoff, C₁-C₈-Alkyl, C₅-C₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder - Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Bevorzugt enthält die staubarme, pulverförmige Flammschutzmittelzusammensetzung und/oder die phosphororganische Flammschutzkomponente auch Carbodiimide.

Erfindungsgemäß sind auch synergistische Kombinationen von den genannten Phosphinaten mit den vorgenannten stickstoffhaltigen Verbindungen, die in einer ganzen Reihe von Polymeren als Flammschutzmittel effektiver wirken, als die Phosphinate allein (DE-A-196 14 424, DE-A-197 34 437 und DE-A-197 37 727). Die Flammschutzwirkung der oberflächenmodifizierten Phosphinate kann durch Kombination mit weiteren Flammschutzmitteln, vorzugsweise stickstoffhaltigen Synergisten oder Phosphor/Stickstoff Flammschutzmitteln verbessert werden.

Die bevorzugte Schüttdichte der phosphororganischen Komponente beträgt 80 bis 800 g/l, besonders bevorzugt 200 bis 700 g/l.

Bevorzugte Staubreduktionsadditive sind Alkylalkoxylate, darunter werden bevorzugt ethoxylierte Alkohole, bevorzugt primäre Alkohole, mit bevorzugt 8 bis 22 C-Atomen und bevorzugt 1 bis 80 EO-Einheiten pro Mol Alkohol, eingesetzt, wobei der Alkoholrest linear oder bevorzugt in 2-Stellung methylverzweigt ist oder lineare und methylverzweigte Reste im Gemisch enthält, so wie dies üblicherweise in Oxoalkoholresten der Fall ist. Zu den bevorzugten ethoxylierten Alkoholen gehören beispielsweise C₁₁-Alkohole mit 3, 5, 7, 8 und 11 EO-Einheiten, (C₁₂-C₁₅)-Alkohole mit 3, 6, 7, 8, 10 und 13 EO-Einheiten, (C₁₄-C₁₅)-Alkohole mit 4, 7 und 8 EO-Einheiten, (C₁₆-C₁₈)-Alkohole mit 8, 11, 15, 20, 25, 50 und 80 EO-Einheiten und Mischungen derselben, wie z.B. die ®Genapol-Typen T80, T110, T150, T200, T250, T500, T800 der Fa. Clariant GmbH. Die angegebenen Ethoxylierungsgrade stellen statistische Mittelwerte dar, die für ein spezielles Produkt eine ganze oder eine gebrochene Zahl sein können. Zusätzlich zu diesen können auch Fettalkohol-EO/PO-Addukte eingesetzt werden.

Weitere bevorzugte Staubreduktionsadditive sind Paraffinöle bzw. Mineralöle mit Siedepunkten über ca. 360°C, Weichparaffin mit Schmelzpunkten von ca. 38 bis 60°C, Tafelparaffine mit Schmelzpunkten von ca. 60 bis 62°C und chloriertes Paraffinöl, mit einem Chlorgehalt von 70 % und einer Viskosität von 1200 Centipoise.

Weitere bevorzugte Staubreduktionsadditive sind Silikonöle mit Molekulargewichten von 1.000 bis 150.000 g/Mol und Viskositäten von 10 bis 1.000.000 mPa·s Beispiele sind Wacker Siliconöl AK 35® und AK100® (Polydimethylsiloxane), Wacker Siliconöl Z 30® (Octamethylcyclotetrasiloxan).

Weiterhin bevorzugt sind Halogen- (z.B. Chlor- und/oder Fluor-) substitutierte Silicone oder funktionalisierte Silicone wie z.B. Amino-, Vinyl-, Allyl-funktionelle Silicone.

Weiterhin bevorzugt sind Methylphenylpolysiloxane.

Weiterhin bevorzugt sind Copolymere Siloxane z.B. von Dimethylpolysiloxanen und Polyalkylenethern (z.B. Typ SF 1066® , von General Electric Co, USA, mit einer Viskosität von 1600 Centipoises).

Weitere bevorzugte Staubreduktionsadditive sind Ethylenglykol, dessen Oligomere und/oder Polymere und deren Ether. Weitere bevorzugte Staubreduktionsadditiv sind Propylenglykol, dessen Oligomere und/oder Polymere und deren Ether. Weitere bevorzugte Staubreduktionsadditive sind Butylenglykol, dessen Oligomere und/oder Polymere und deren Ether.

Weitere bevorzugte Staubreduktionsadditiv sind Rizinusöl, Glycerin, Di-2-ethylhexylphthalat und Phthalsäurepolyester.

Weitere bevorzugte Staubreduktionsadditive sind aromatische und aliphatische Phosphorsäureester wie z.B. Diphenylcresylphosphate, Tricresylphosphate, Diphenyl-2-ethyl-hexylphosphate und Tris-2-ethyl-hexylphosphate, Tris-(chlorisopropyl)-phosphat, Triethylphosphat, N,N-Dihydroxyethylaminomethanphosphonsäurediethylester

Weiteres bevorzugtes Staubreduktionsadditiv ist Astacin Finish PUD® (BASF AG, Ludwigshafen, 40 %, wässrig, Dispersion eines anionischen Polyesterpolyurethane nach DE 2 645 779 C3).

Weitere bevorzugte Staubreduktionsadditive sind Wachse. Diese sind natürlich oder künstlich gewonnene Stoffe, die bei 20°C fest und knetbar und über 40°C ohne Zersetzung schmelzend und niedrigviskos sind. Wachse gehen in der Regel zwischen 50 und 90°C, in Ausnahmefällen auch bis zu etwa 200°C, in den schmelzflüssigen, niedrigviskosen Zustand über. Man unterscheidet natürliche Wachse wie Carnaubawachs, chemisch modifizierte Wachse wie Montanesterwachse und synthetische Wachse wie Polyethylenwachse.

Bevorzugte Montanwachse für die Kunststoffverarbeitung sind Gleitmittel und interne Trennmittel für die Verarbeitung von Polyvinylchlorid, Polyolefinen, Polyamind, Polystyrol, linearen Polyestern, thermoplastischem Polyurethan, härtbaren Formmassen und anderen Kunststoffen. Sie sind Folgeprodukte der Raffination von Rohmontanwachs, das durch Extraktion von Braunkohle gewonnen wird. Sie stellen langkettige Carbonsäuren der Kettenlängen C₂₈-C₃₂, deren Voll- und Teilester mit Ethylenglykol Gylcerin, Butylenglykol und Erdalkalisalze von teilhydrolysierten Estern dar, z.B. Licowax E® , Licowax WE 4® und Licowax OP® .

Bevorzugte Polyethylenwachse sind für den Polymerbereich (PVC, Gummi, Polyolefine) geeignet. z.B. Licowax PE 520® , Licowax PE 810® , Licowax PE 820® , Licowax PE 830® , Licowax PE 840® , Licomont CaV® , Licolub WE4® , Ceridust 5551® .

Besonders bevorzugt sind dispergierte oder mikronisierte Wachse wie z.B. Agrocer® 09 (wässrige Wachsdispersion auf Basis Montanwachs, enthält 23 % Wachs) oder Ceridust 5551® , teilverseiftes Esterwachs einer Montansäure, mikronisiert, Teilchengröße 9 µm der Fa. Clariant GmbH.

Bevorzugt handelt es sich bei dem Staubreduktionsadditiv um natürliche, chemisch modifizierte und/oder synthetische Wachse; besonders bevorzugt um Carnaubawachse und Montanwachse.

Bevorzugte Staubreduktionsadditive sind Ester, Amide, Anhydride, Hydrate und Salze von gesättigten aliphatischen Mono-, Di-, Tri- und Polycarbonsäuren.

Bevorzugte Staubreduktionsadditive sind weiterhin C₁-C₂₀-(Alkyl-, Oxalkyl, Alkenyl-, Alkinyl-, Aralkyl-, Alkylaryl- oder Aryl-)Monocarbonsäureester, C₁-C₂₀-(Alkyl-, Oxalkyl, Alkenyl-, Alkinyl-, Aralkyl-, Alkylaryl- oder Aryl-) Dicarbonsäureester, C₁-C₂₀-(Alkyl-, Oxalkyl, Alkenyl-, Alkinyl-, Aralkyl-, Alkylaryl- oder Aryl-)Tri-carbonsäureester, C₁-C₂₀-(Alkyl-, Oxalkyl, Alkenyl-, Alkinyl-, Aralkyl-, Alkylaryl- oder Aryl)-Oligocarbonsäureester, C₁-C₂₀-(Alkyl-, Oxalkyl, Alkenyl-, Alkinyl-, Aralkyl-, Alkylaryl- oder Aryl-) Polycarbonsäureester.

Bevorzugte Staubreduktionsadditive sind weiterhin Dicarbonsäuremonoorganyl- oder - diorganylester; Tricarbonsäuremonoorganyl-, -diorganylester oder -triorganylester; Oligocarbonsäuremonoorganyl-, -diorganylester, -triorganylester oder - oligoorganylester; Polycarbonsäuremonoorganyl-, -diorganylester, -triorganylester, - oligoorganylester oder -polyorganylester oder Mischungen davon.

Bevorzugte Staubreduktionsadditive sind weiterhin Phthalsäureester, darunter Phthalsäuremonoorganylester oder Phthalsäurebisorganylester (Organyl = z.B. Alkyl, Oxalkyl, Alkenyl, Alkinyl, Aralkyl, Alkylaryl oder Aryl, bevorzugt Phthalsäuremono-alkylester, Phthalsäuredialkylester (Alkyl = lineares, verzweigtes, cyclisches, substtuiertes cyclisches, heterocyclisches C₁-C₂₀), z.B. Dimethylphthalat, Diethylphthalat, Dipropylphthalat, Diisopropylphthalat, Dibutylphthalat, epoxidiertes Di(2-ethylhexyl)phthalat, Diisooctylphthalat, Dioctylphthalat, Diisononylphthalat, n-Octylphthalat, n-Decylphthalat, Diisodecylphthalat, Butylbenzylphthalat, Butylcyclohexylphthalat, Dicaprylphthalat, Di(3,5,5-trimethylhexyl)phthalat, Di(1-allyl-2,2,6,6-tetramethylpiperidin-4-yl) phthalat.

Bevorzugte Staubreduktionsadditive sind weiterhin Isophthalsäureester, darunter Isophthalsäuremonoorganylester oder Isophthalsäurebisorganylester (Organyl = z.B. Alkyl, Oxalkyl, Alkenyl, Alkinyl, Aralkyl, Alkylaryl oder Aryl, bevorzugt Isophthalsäuremonoalkylester, Isophthalsäuredialkylester (Alkyl = lineares, verzweigtes, cyclisches, substituiertes cyclisches, heterocyclisches C₁-C₂₀), z.B. Di(2-ethylhexyl)-isophthalat.

Bevorzugte Staubreduktionsadditive sind weiterhin Terephthalsäureester, darunter Terephthalsäuremonoorganylester oder Terephthalsäurebisorganylester (Organyl = z.B. Alkyl, Oxalkyl, Alkenyl, Alkinyl, Aralkyl, Alkylaryl oder Aryl, bevorzugt Terephthalsäuremonoalkylester, Terephthalsäuredialkylester (Alkyl = lineares, verzweigtes, cyclisches, substituiertes cyclisches, heterocyclisches C₁-C₂₀).

Bevorzugte Staubreduktionsadditive sind weiterhin Oxalsäureester, Malonsäureester (z.B. Di(2,2,6,6-tetramethylpiperidin-4-yl) diethylmalonat, Di(1,2,2,6,6-pentamethylpiperidin-4-yl) dibutylmalonat, Di(1,2,2,6,6-pentamethylpiperidin-4-yl) butyl(3,5-di-tert-butyl-4-hydroxybenzyl)malonat), Bernsteinsäureester (z.B. Di(2,2,6,6-tetramethylpiperidin-4-yl) succinat), Glutarsäureester (z.B. Di(2,2,6,6-tetramethylpiperidin-4-yl) glutarat).

Bevorzugte Staubreduktionsadditive sind weiterhin Adipinsäureester, darunter Adipinsäuremonoorganylester oder Adipinsäurebisorganylester (Organyl = z.B. Alkyl, Oxalkyl, Alkenyl, Alkinyl, Aralkyl, Alkylaryl oder Aryl, bevorzugt Adipinsäuremonoalkylester, Adipinsäuredialkylester (Alkyl = lineares, verzweigtes, cyclisches, substituiertes cyclisches, heterocyclisches C₁-C₂₀), z.B. Dimethyladipat, Diethyladipat, Di-n-propyladipat, Di-iso-propyladipat, Di-n-butyladipat, Di-isobutyladipat, Di-tert-butyladipat, Di(n-Octyl)adipat, Di(2-ethylhexyl)adipat, Diisodecyladipat, n-Octyladipat, 2-ethylhexyladipat, n-Decyladipat, isodecyladipat, Di(2,2,6,6-tetramethylpiperidin-4-yl) adipat.

Bevorzugte Staubreduktionsadditive sind weiterhin Pimelinsäureester, Suberinsäure, Azelainsäureester (z.B. Dialkylazelat, besonders Di(2-ethylhexyl)azelat, Ester der 1,13-Tridecandicarbonsäure (Brassylic acid).

Bevorzugte Staubreduktionsadditive sind weiterhin Sebacinsäureester, darunter Sebacinsäuremonoorganylester oder Sebacinsäurebisorganylester (Organyl = z.B. Alkyl, Oxalkyl, Alkenyl, Alkinyl; Aralkyl, Alkylaryl oder Aryl, bevorzugt Sebacinsäuremonoalkylester, Sebacinsäuredialkylester (Alkyl = lineares, verzweigtes, cyclisches, substituiertes cyclisches, heterocyclisches C₁-C₂₀), z.B. Dialkylsebacat, besonders Di(2-ethylhexyl)sebacat, Di(2,2,6,6-tetramethylpiperidin-4-yl)-sebacat, Di(1,2,2,6,6-pentamethylpiperidin-4-yl) sebacat, Di(1,2,3,6-tetramethyl-2,6-diethyl-piperidin-4-yl) sebacat, Di(1-octyloxy-2,2,6,6-tetramethylpiperidin-4-yl) sebacat, Di(1-cyclohexyloxy-2,2,6,6-tetramethylpiperidin-4-yl) sebacat.

Bevorzugte Staubreduktionsadditive sind weiterhin Tetrahydrophtalsäureester, darunter Tetrahydrophtalsäuremonoorganylester oder Tetrahydrophtalsäurebisorganylester (Organyl = z.B. Alkyl, Oxalkyl, Alkenyl, Alkinyl, Aralkyl, Alkylaryl oder Aryl, bevorzugt Tetrahydrophtalsäuremonoalkylester, Tetrahydrophtalsäuredialkylester (Alkyl = lineares, verzweigtes, cyclisches, substituiertes cyclisches, heterocyclisches C₁-C₂₀), z.B. Di(2-ethylhexyl)-tetrahydrophthalat.

Bevorzugte Staubreduktionsadditive sind weiterhin Tetrahydroisophthalsäureester, darunter Tetrahydroisophthalsäuremonoorganylester oder Tetrahydroisophthalsäurebisorganylester (Organyl = z.B. Alkyl, Oxalkyl, Alkenyl, Alkinyl, Aralkyl, Alkylaryl oder Aryl, bevorzugt Tetrahydroisophthalsäuremonoalkylester, Tetrahydroisophthalsäuredialkylester (Alkyl = lineares, verzweigtes, cyclisches, substituiertes cyclisches, hetrocyclisches C₁-C₂₀).

Bevorzugte Staubreduktionsadditive sind weiterhin Tetrahydroterephthalsäureester, darunter Tetrahydroterephthalsäuremonoorganylester oder Tetrahydroterephthalsäurebisorganylester (Organyl= z.B. Alkyl, Oxalkyl, Alkenyl, Alkinyl, Aralkyl, Alkylaryl oder Aryl, bevorzugt Tetrahydroterephthalsäuremonoalkylester, Tetrahydroterephthalsäuredialkylester (Alkyl = lineares, verzweigtes, cyclisches, substituiertes cyclisches, heterocyclisches C₁-C₂₀).

Bevorzugte Staubreduktionsadditive sind weiterhin Hexahydrophtalsäureester, darunter Hexahydrophtalsäuremonoorganylester oder Hexahydrophtalsäurebisorganylester (Organyl = z.B. Alkyl, Oxalkyl, Alkenyl, Alkinyl, Aralkyl, Alkylaryl oder Aryl, bevorzugt Hexahydrophtalsäuremonoalkylester, Hexahydrophtalsäuredialkylester (Alkyl = lineares, verzweigtes, cyclisches, substituiertes cyclisches, heterocyclisches C₁-C₂₀), z.B. Di(2-ethylhexyl)hexahydrophthalat.

Bevorzugte Staubreduktionsadditive sind weiterhin Hexahydroisophthalsäureester, darunter Hexahydroisophthalsäuremonoorganylester oder Hexahydroisophthalsäurebisorganylester (Organyl = z.B. Alkyl, Oxalkyl, Alkenyl, Alkinyl, Aralkyl, Alkylaryl oder Aryl, bevorzugt Hexahydroisophthalsäuremonoalkylester, Hexahydroisophthalsäuredialkylester (Alkyl = lineares, verzweigtes, cyclisches, substituiertes cyclisches, heterocyclisches C₁-C₂₀).

Bevorzugte Staubreduktionsadditive sind weiterhin Hexahydroterephthalsäureester, darunter Hexahydroterephthalsäuremonoorganylester oder Hexahydroterephthalsäurebisorganylester (Organyl = z.B. Alkyl, Oxalkyl, Alkenyl, Alkinyl, Aralkyl, Alkylaryl oder Aryl, bevorzugt Hexahydroterephthalsäuremonoalkylester, Hexahydroterephthalsäuredialkylester (Alkyl = lineares, verzweigtes, cyclisches, substituiertes cyclisches, heterocyclisches C₁-C₂₀).

Bevorzugte Staubreduktionsadditive sind weiterhin Maleinsäureester, darunter Maleinsäuremonoorganylester oder Maleinsäurebisorganylester (Organyl = z.B. Alkyl, Oxalkyl, Alkenyl, Alkinyl, Aralkyl, Alkylaryl oder Aryl, bevorzugt Maleinsäuremonoalkylester, Maleinsäuredialkylester (Alkyl = lineares, verzweigtes, cyclisches, substituiertes cyclisches, heterocyclisches C₁-C₂₀), z.B. Di(1-benzyl-2,2,6,6-tetramethylpiperidin-4-yl) maleat.

Bevorzugte Staubreduktionsadditive sind weiterhin Ester von Hydroxycarbonsäuren, Hydroxydicarbonsäuren, Hydroxytricarbonsäuren, Hydroxyoligocarbonsäuren und/oder Hydroxypolycarbonsäuren, z.B. Tartronsäure, Äpfelsäure, Weinsäure, Citronensäure etc.

Bevorzugte Staubreduktionsadditive sind weiterhin Citronensäuresäureester, darunter Citronensäuresäuremonoorganylester oder Citronensäuresäurebisorganylester (Organyl = z.B. Alkyl, Oxalkyl, Alkenyl, Alkinyl, Aralkyl, Alkylaryl oder Aryl, bevorzugt Citronensäuresäuremonoalkylester, Citronensäuresäuredialkylester (Alkyl = lineares, verzweigtes, cyclisches, substituiertes cyclisches, heterocyclisches C₁-C₂₀).

Bevorzugte Staubreduktionsadditive sind weiterhin Butylepoxystearat, Hexylepoxystearat, epoxidiertes Sojaöl, epoxidiertes Octyltallat, epoxidiertes Octyloleat, Tetraethyleneglycol/di(2-ethylhexoat), und Triethylenglycol/di(2-ethylhexoat).

Bevorzugte Staubreduktionsadditive sind weiterhin Ester von ein-, zwei-, drei-, vier-, fünfwertigen Alkoholen und höheren Polyolen.

Bevorzugte Staubreduktionsadditive sind Mono-, Di-, Tri- oder Tetraorganylester von Pentaerythrit oder Mischungen davon, z.B. Pentaerythrittetrabenzoat.

Bevorzugte Staubreduktionsadditive Sulfonamidbasierende Verbindungen, besonders bevorzugt Aromatische Sulfonamide z.B. N-Ethyltoluolsulfonamid, N-Cyclohexyltoluolsulfonamid, N-Butylbenzolsulfonamid, N-Methylbenzolsulfonamid, N-Butyl-benzolsulfonamid, p-Toluolsulfonamid, N-Ethyl-p-toluolsulfonamid und N-Cyclohexyl-p-toluol sulfonamid.

Bevorzugte Staubreduktionsadditive sind Glycerin, Hexylglycol, modifiziertes Urethane Prepolymer das im Gewichtsdruchschnitt ein Molekulargewicht von 400 bis 2000, bevorzugt 600 bis 1000 besitzt.

Bevorzugte Staubreduktionsadditive sind p-Hydroxybenzoesäureester z.B. Hexyloxyethoxyethyl p-hydroxybenzoat, Hexyloxypropoxypropyl p-hydroxybenzoat, Hexyloxybutoxybutyl p-hydroxybenzoat, Octyloxyethoxyethyl p-hydroxybenzoat, Octyloxypropoxypropyl p-hydroxybenzoat, Octyloxybutoxybutyl p-hydroxybenzoat, 2'-Ethylhexyloxyethoxyethyl p-hydroxybenzoat, 2'-Ethylhexyloxypropoxypropyl p-hydroxybenzoat, 2'-Ethylhexyloxybutoxybutyl p-hydroxybenzoat, Decyloxyethoxyethyl p-hydroxybenzoat, Decyloxypropoxypropyl p-hydroxybenzoat, Decyloxybutoxybutyl p-hydroxybenzoat.

Bevorzugte Staubreduktionsadditive sind p-Hydroxybenzoesäurealkylester z.B. Octyl p-hydroxybenzoat, 2-ethylhexyl p-hydroxybenzoat, heptyl p-hydroxybenzoat, 2-ethyldecyl p-hydroxybenzoat, 2-octyloctyl p-hydroxybenzoat and 2-decyldodecyl p-hydroxybenzoat.
Bevorzugte Staubreduktionsadditive sind Phenole such as beta-Naphthol, Dibenzylphenol and Octylcresol.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogen-phosphat, Bis(2-ethylhexyl)-p-tolylphosphat, Tritolylphosphat, Bis(2-ethylhexyl)-phenylphosphat, Di(nonyl)phenylphosphat, Phenyl methyl hydrogen phosphat, Di(dodecyl)-p-tolylphosphat, p-Tolylbis(2,5,5-trimethylhexyl)phosphat oder 2-Ethylhexyldiphenylphosphat. Ganz besonders geeignet ist Triphenylphosphat und Resorcinol-bis-(diphenylphosphat) (RDP) und dessen kernsubstituierten Derivate.

Bevorzugte Staubreduktionsadditive sind weiterhin Tri(butoxyethyl)phosphat, Trioctylphosphat, Trikresylphosphat, 2-Ethylhexyldiphenylphosphat, Cresyldiphenylphosphat.

Bevorzugte Staubreduktionsadditive sind organische Salze von mehrwertigen Metallen, besonders bevorzugt organische Salze von Elementen der zweiten, dritten und vierten Hauptgruppe und der zweiten Nebengruppe besonders der Elemente Magnesium, Calcium, Strontium, Barium, Zink, Cadmium, Aluminium, Zinn, Blei. Besonders bevorzugt sind Carbonsäuren mit mindestens 12 Kohlenstoffatome Dodecansäure (Laurinsäure), Cocossäure, Tetradecansäure (Myristinsäure), Hexadecansäure (Palmitinsäure, Cetylsäure), Octadecansäure (Stearinsäure), Octadecensäure, cis-9-(Ölsäure, Elainsäure), Octadecensäure, trans-9-(Elaidinsäure), Eicosansäure (Arachidinsäure), Docosansäure (Behensäure).

Die mittlere Teilchengröße der staubarmen, pulverförmigen Flammschutzmittelzusammensetzung beträgt 0,1 bis 1000 µm, bevorzugt 1 bis 100 µm.

Die bevorzugte Schüttdichte der staubarmen, pulverförmigen Flammschutzmittelzusammensetzung beträgt 80 bis 800 g/l, besonders bevorzugt 200 bis 700 g/l.
Bevorzugte Mengen-Verhältnisse von Staubreduktionsadditiv zu phosphororganischer Flammschutzkomponente sind 1 zu 999 bis 1 zu 4, bevorzugt 1 zu 99 bis 1 zu 19.

Die Erfindung betrifft auch ein Verfahren zur Herstellung der erfindungsgemäßen staubarmen, pulverförmigen Flammschutzmittelzusammensetzungen, dadurch gekennzeichnet, dass man das Staubreduktionsadditiv in Wasser emulgiert und dann diese Emulsion zu einer wässrigen Suspension der phosphororganischen Flammschutzkomponente gibt und 0,1 bis 100 Stunden bei 20 bis 200°C rührt, den Feststoff abtrennt, mit Wasser wäscht und anschließend trocknet.

Im Detail wird dies so ausgeführt, indem das Staubreduktionsadditiv, gegebenenfalls unter Zuhilfenahme eines geeigneten Emulgators (z.B. Arkopal N 090® der Firma Clariant GmbH) in Wasser emulgiert wird. Die wässrige Emulsion wird zu einer wässrigen Suspension der phosphororganische Flammschutzkomponente gegeben und 0,1 bis 100 Stunden bei 20 bis 200°C gerührt. Der Feststoff wird danach abgetrennt. Geeignete Verfahren dazu sind Filtrieren, Zentrifugieren, Dekantieren. Der Feststoff wird mit Wasser gewaschen. Geeignete Feststoff-zu-Waschwasser-Verhältnisse sind 1 zu 100 bis 1 zu 0,5. Anschließend wird der feuchte Feststoff bei 20 bis 400°C getrocknet. Dies kann im Trockenschrank erfolgen. Bevorzugt ist jedoch die Trocknung im Heißluftstrom, z.B. einem Spin-flash-Trockner der Fa. Anhydro oder einem Trockner, der nach dem Wirbelbett-Prinzip arbeitet. Weiterhin bevorzugt ist die Trocknung bei vermindertem Druck. Bevorzugt ist auch die Sprühtrocknung einer Suspension des gewaschenen Feststoffs.

Die erfindungsgemäße Staubreduktion in wässriger Phase führt in überraschender Weise dazu, dass die angestrebten Effekte bei sehr geringen Gehalten an Staubreduktionsadditiv erreicht werden.

Die erfindungsgemäße staubarme, pulverförmige Flammschutzmittelzusammensetzung kann in einer Ausführungsform hergestellt werden, indem man das Staubreduktionsadditiv in flüssiger Form in einem geeigneten Mischer zu der bewegten phosphororganischen Flammschutzkomponente gibt und 0,1 bis 100 Stunden bei 20 bis 200°C mischt und gegebenenfalls anschließend bei 20 bis 400°C trocknet. Bei Umgebungstemperatur feste Staubreduktionsadditive werden dazu aufgeschmolzen.

Die erfindungsgemäße staubarme, pulverförmige Flammschutzmittelzusammensetzung kann in einer weiteren Ausführungsform hergestellt werden, indem das feste Staubreduktionsadditiv in einem geeigneten Mischer zu der bewegten phosphororganischen Flammschutzkomponente gegeben, 0,1 bis 100 Stunden gemischt und dabei bis zum Schmelzpunkt des Staubreduktionsadditivs erhitzt wird. Geeignete Temperaturen sind 20 bis 200°C.

Geeignete Mischer können sein: Pflugscharmischertypen der Fa. Lödige, Ringspaltmischertypen der Fa. Lödige, (z.B. Typ CB30), Flexomix-Mischertypen der Fa. Schugi, Ringspaltmischer Typ HEC der Fa. Niro, Ringschichtmischer (z.B. Typ K-TTE4) der Fa. Drais/Mannheim, Eirich-Mischer (z.B. Typ R02), Telschig-Mischer (Typ WPA6), Zig-Zag-Mischer der Fa. Niro.

Die zunächst entstehende Produktmischung kann in einem geeigneten Trockner getrocknet beziehungsweise zum weiteren Kornaufbau getempert werden. Erfindungsgemäße Trockner können sein: Fließbetttrockner der Fa. Hosokawa Schugi (Typen: Schugi Fluid-Bed, Vometec Fließbett-Trockner), Wirbelbetttrockner der Fa. Waldner bzw. der Fa. Glatt, Turbo-Flugschichttrockner der Fa. Waldner, Spin-flash-Trockner der Fa. Anhydro sowie Trommeltrockner.

Bevorzugte Betriebsbedingungen im Fließbetttrockner sind: Lufteintrittstemperatur 120 bis 280°C, Produkttemperatur 20 bis 200°C.

Die verbleibende Feuchte der erfindungsgemäßen staubarmen, pulverförmigen Flammschutzmittelzusammensetzung beträgt 0,01 bis 10 %, bevorzugt 0,05 bis 1 %.

Die Rieselfähigkeit der erfindungsgemäßen staubarmen, pulverförmigen Flammschutzmittelzusammensetzung beträgt, bestimmt in Anlehnung an DIN 53916 und ausgedrückt als der Cotangens des Schüttwinkels Phi, bevorzugt 1 bis 2, besonders bevorzugt 1,2 bis 1,8.

Die Staubneigung der erfindungsgemäßen staubarmen, pulverförmigen Flammschutzmittelzusammensetzung beträgt 1 bis 65 %, bevorzugt 5 bis 60 %.

Die Erfindung betrifft auch eine flammgeschützte Polymerformmasse, die die erfindungsgemäße staubarme, pulverförmige Flammschutzmittelzusammensetzung enthält.

Bevorzugt enthält die flammgeschützte Polymerformmasse
1 bis 50 Gew.-% staubarme, pulverförmige Flammschutzmittelzusammensetzung,
1 bis 99 Gew.-% thermoplastisches Polymer oder Mischungen derselben
0 bis 60 Gew.-% Additive
0 bis 60 Gew.-% Füllstoff.

Besonders bevorzugt enthält die flammgeschützte Polymerformmasse
5 bis 30 Gew.-% staubarme, pulverförmige Flammschutzmittelzusammensetzung,
5 bis 90 Gew.-% thermoplastisches Polymer oder Mischungen derselben
5 bis 40 Gew.-% Additive
5 bis 40 Gew.-% Füllstoff.

Bevorzugt enthält die flammgeschützte Polymerformmasse weiterhin Komponenten B und/oder C, wie zuvor beschrieben.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol).
Besonders bevorzugt handelt es sich bei den thermoplastischen Polymeren um Polyamid, Polyester oder ABS.

Die Erfindung betrifft schließlich auch Polymer-Formkörper, -Filme, -Fäden und - Fasern, enthaltend die erfindungsgemäße staubarme, pulverförmige Flammschutzmittelzusammensetzung.

Bei dem Polymer der Polymer-Formkörper, -Filme, -Fäden und -Fasern handelt es sich um ein thermoplastisches oder duroplastisches Polymer.

Bevorzugt handelt es sich den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS.

Bevorzugte thermoplastische Polymere sind Polyethylen (PE), Polypropylen (PP), Polystyrol (PS), Polyvinylchlorid (PVC), Polyacrylnitril (PAN) und Polyacrylate.

Bevorzugt handelt es sich bei den duroplastischen Polymeren um Formaldehyd-, Epoxid-, Melamin-, Phenolharz-Polymere und/oder Polyurethane.

Bevorzugt enthalten die Polymer-Formkörper, -Filme, -Fäden und -Fasern
1 bis 50 Gew.-% staubarme, pulverförmige Flammschutzmittelzusammensetzung,
1 bis 99 Gew.-% Polymer oder Mischungen derselben
0 bis 60 Gew.-% Additive
0 bis 60 Gew.-% Füllstoff.

Besonders bevorzugt enthalten die Polymer-Formkörper, -Filme, -Fäden und - Fasern
5 bis 30 Gew.-% staubarme, pulverförmige Flammschutzmittelzusammensetzung,
5 bis 90 Gew.-% Polymer oder Mischungen derselben
5 bis 40 Gew.-% Additive
5 bis 40 Gew.-% Füllstoff.

Die erfindungsgemäße staubarme, pulverförmige Flammschutzmittelzusammensetzung wird bevorzugt in Compounds angewendet, die weiter zur Erzeugung von Polymer-Formkörpern verwendet werden. Erfindungsgemäß sind auch Polymer-Formkörper, die die erfindungsgemäßen staubarmen, pulverförmigen Flammschutzmittelzusammensetzung enthalten.

Die flammhemmenden Komponenten können in thermoplastische Polymere eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden.

Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt auf einer Spritzgussmaschine zu Formteilen zu verarbeiten.

Bevorzugte Füllstoffe sind Glas (bevorzugt in Kugel oder in Faserform), Oxide und/oder Hydroxide der Elemente der zweiten und dritten Hauptgruppe des Periodensystems der Elemente (bevorzugt Aluminium und Magnesium), Schichtsilicate und Tonminerale z.B. Bentonite, Montmorillonite, Hectorite, Saponite, gefällte/pyrogene/kristalline/amorphe Kieselsäuren, Kreide.

Bevorzugte Additive sind Synergisten, Antioxidantien, Lichtschutzmittel, Gleitmittel, Farbmittel, Nukleierungsmittel oder Antistatika sein. Beispiele für die verwendbaren Zusätze sind in EP 0 584 567 A1 angegeben.

Die Erfindung betrifft auch eine Intumeszenz-Flammschutz-Beschichtung enthaltend mindestens 1 bis 50 % staubarme, pulverförmige Flammschutzmittelzusammensetzung und 0 bis 60 % Ammoniumpolyphosphat

### Beispiele

### Bestimmung der Staubreduktionsadditiv-Konzentration

50 g Probenmaterial werden in einen 500 ml-Messkolben eingewogen, mit Aceton bis zur Marke aufgefüllt und auf einem Magnetrührer 10 bis 15 Minuten gerührt. Anschließend wird über ein Faltenfilter (32 cm Durchmesser) filtriert; das Filtrat wird in einem trockenen Glasgefäß aufgefangen. Das meist trübe Filtrat wird dann mit 10 bis 20 Tropfen einer Lösung von 10 g konzentrierter Salzsäure in 100 ml Aceton versetzt und nach gründlichem Mischen über doppelte Faltenfilter (32 cm) in einen trockenen 250 ml-Messkolben filtriert. Das klare, leicht gelblich gefärbte Filtrat wird in einen gewogenen 500 ml-Destillationskolben mit 2 bis 3 Siedesteinen gegeben.

Nach dem Abdestillieren der Hauptmenge des Acetons wird der Destillationskolben in einem elektrisch beheizten Trockenschrank bei 120°C bis zur Gewichtskonstanz erhitzt. Nach dem Erkalten des Kolbens wird die Additiv Menge gravimetrisch ermittelt.

### Bestimmung der Rieselfähigkeit

Die Bestimmung der Rieselfählgkeit erfolgte mit dem in der DIN 53 916 angegebenen Testgerät nach PFRENGLE. (DIN 53 916 (Ausgabe August 1974): Bestimmung der Rieselfähigkeit von Pulvern und Granulaten.)

### Bestimmung der Staubneigung

In eine Waschflasche werden 10 g des zu untersuchenden Materials eingewogen. Bei einem Gasstrom von 1 l/min wird durch das Material 20 min Stickstoff durchgeleitet. Die danach zurückbleibende Pulvermenge wird gewogen. Der ausgetragene Anteil wird durch die Einwaage dividiert und auf 100 % bezogen.

### Bestimmung der Kornverteilung mit dem Microtrac Granulometer

Die Teilchengröße in wässriger Dispersion wird mit Hilfe eines Granulometer Microtrac-ASVR/FRA der Fa. Leeds u. Northrup bestimmt. Gemessen wird die Reflexion bzw. Beugung eines Laserstrahls beim Durchdringen der Dispersion. Hierfür werden 400 ml Ethanol durch die Lasermesszelle gepumpt. Automatisch wird die Festkörperprobe (z.B. 70 mg) zudosiert und nach 10 min die Teilchengrößenverteilung bestimmt. Die Auswertungseinheit des Gerätes berechnet den d₅₀- und den d₉₀-Wert.

### Herstellung, Verarbeitung und Prüfung von flammhemmenden Compounds (Polymerformmasse) und Kunststoff-Formkörper:

Die Flammschutzmittelkomponenten werden mit dem Polymergranulat und evtl. Additiven vermischt und auf einem Doppelschnecken-Extruder (Typ Leistritz LSM 30/34) bei Temperaturen von 230 bis 260°C (PBT-GV) bzw. von 260 bis 280°C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270°C (PBT-GV) bzw. von 260 bis 290°C (PA 66-GV) zu Prüfkörpern verarbeitet.

### Beispiel 1 (erfindungsgemäß)

250 g Diethylphosphinsäure-Aluminiumsalz werden in 1 l vollentsalztem Wasser dispergiert. Die Dispersion wird auf 60°C erwärmt. Zwischenzeitlich wurden 1 g Arkopal N 080® und 25 g Di-2-ethylhexylphthalat (DOP) eingewogen und mit 100 g vollentsalztem Wasser emulgiert. Von der DOP-Emulsion wird soviel zum Diethylphosphinsäure-Aluminiumsalz (d₅₀ = 49) getropft wie 0,4 g DOP entspricht und 1 h bei 60°C gerührt. Der Feststoff wird abfiltriert und der Filterkuchen mit 1 l vollentsalztem Wasser gewaschen. Die Trocknung erfolgt bei 120°C im Vakuumtrockenschrank. Das Produkt enthält 0,05 Gew.-% Di-2-ethylhexylphthalat.

### Beispiel 2 (erfindungsgemäß)

Wie in Beispiel 1 wird zu einer 60°C warmen Dispersion von 250 g Diethylphosphinsäure-Aluminiumsalz soviel von der DOP-Emulsion wird soviel zum Diethylphosphinsäure-Aluminiumsalz getropft wie 1 g DOP entspricht, gerührt, der Feststoff abfiltriert, gewaschen, getrocknet und ein Produkt erhalten, das 0,12 Gew.-% Di-2-ethylhexylphthalat enthält.

### Beispiel 3 (erfindungsgemäß)

Wie in Beispiel 1 wird zu einer 60°C warmen Dispersion von 250 g Diethylphosphinsäure-Aluminiumsalz soviel von der DOP-Emulsion wird soviel zum Diethylphosphinsäure-Aluminiumsalz getropft wie 2 g DOP entspricht, gerührt, der Feststoff abfiltriert, gewaschen, getrocknet und ein Produkt erhalten, das 0,23 Gew.-% Di-2-ethylhexylphthalat enthält.

### Beispiel 4 (erfindungsgemäß)

Wie in Beispiel 1 wird zu einer 60°C warmen Dispersion von 250 g Diethylphosphinsäure-Aluminiumsalz soviel von der DOP-Emulsion wird soviel zur Diethylphosphinsäure-Aluminiumsalz getropft wie 10 g DOP entspricht, gerührt, der Feststoff abfiltriert, gewaschen, getrocknet und ein Produkt erhalten, das 1,06 Gew.-% Di-2-ethylhexylphthalat enthält.

### Beispiel 5 (erfindungsgemäß)

In einem Haushalts-Multimixer (Fa. Braun) werden 0,25 g Genapol 2822® mit 249,75 g Diethylphosphinsäure-Aluminiumsalz 5 min vermischt.

### Beispiel 6 (erfindungsgemäß)

In einem Haushalts-Multimixer (Fa. Braun) werden 2,5 g Genapol 2822® mit 247,5 g Diethylphosphinsäure-Aluminiumsalz 5 min vermischt.

### Beispiel 7 (erfindungsgemäß)

In einem Haushalts-Multimixer (Fa. Braun) werden 12,5 g Genapol 2822® mit 237,5 g Diethylphosphinsäure-Aluminiumsalz 5 min vermischt.

### Beispiel 8 (erfindungsgemäß)

In einem Haushalts-Multimixer (Fa. Braun) werden 25 g Genapol 2822® mit 225 g Diethylphosphinsäure-Aluminiumsalz 5 min vermischt.

### Beispiel 9 (erfindungsgemäß)

In einem Haushalts-Multimixer (Fa. Braun) werden 250 g Melaminpolyphosphat Melapur® MP (Melaminphosphat), Fa. DSM Melapur, NL mit 250 g Diethylphosphinsäure-Aluminiumsalz 5 min vermischt.

### Beispiel 10 (erfindungsgemäß)

In einem Haushalts-Multimixer (Fa. Braun) werden 2,5 g Genapol 2822 mit 247,5 g des Produktes aus Beispiel 9 5 min vermischt.

### Beispiel 11 (erfindungsgemäß)

25 Teile des Flammschutzmittels aus Beispiel 10 werden mit 45 Teilen Polybutylenterephthalat-Granulat, 30 Teilen Glasfasern vermischt und auf einem Doppelschnecken-Extruder (Typ Leistritz LSM 30/34) bei Temperaturen von 230 bis 260°C (PBT-GV) eingearbeitet. Der homogenisierte Polymerstrang wird abgezogen, im Wasserbad gekühlt und anschließend granuliert. Nach ausreichender Trocknung wurden die Granulate auf einer Spritzgießmaschine (Typ Aarburg Allrounder) bei Massetemperaturen von 240 bis 270°C (PBT-GV) zu Formkörpern verarbeitet. Im UL94-Brandtest wird die V-0-Klassifizierung erzielt.

### Beispiel 12 (erfindungsgemäß)

2000 g Diethylphosphinsäure-Aluminiumsalz (d₅₀ = 11 µm) werden in ca. 3000 g vollentsalztem Wasser dispergiert. 200 g Agrocer® 09 wird zu dem dispergierten Diethylphosphinsäure-Aluminiumsalz eingerührt. Dieses Gemisch wird 1 Stunde bei Raumtemperatur gerührt. Das behandelte Diethylphosphinsäure-Aluminiumsalz wird nun abfiltriert (Filterpapier: Blauband), der Filterkuchen mit ca. 3500 ml vollentsalztem Wasser gewaschen und bei 120°C im Vakunmtrockenschrank getrocknet. Es werden 2020 g staubarme, pulverförmige Flammschutzmittelzusammensetzung erhalten.

### Beispiel 13 (erfindungsgemäß)

2000 g Diethylphosphinsäure-Aluminiumsalz (d₅₀ = 11 µm) werden in ca. 3000 g vollentsalztem Wasser dispergiert. 400 g Agrocer® 09 wird zu dem dispergierten Diethylphosphinsäure-Aluminiumsalz eingerührt. Dieses Gemisch wird 1 Stunde bei Raumtemperatur gerührt. Das behandelte Diethylphosphinsäure-Aluminiumsalz wird nun abfiltriert (Filterpapier: Blauband), der Filterkuchen mit ca. 3500 ml vollentsalztem Wasser gewaschen und bei 120°C im Vakuumtrockenschrank getrocknet. Es werden 2058 g staubarme, pulverförmige Flammschutzmittelzusammensetzung mit einer mittleren Teilchengröße d₅₀ von 13 µm erhalten.

**Tabelle**

| Beispiel | *POF | Additiv | | Produkt | | | | |
|---|---|---|---|---|---|---|---|---|
| | g | Typ | Einwaage g | Additiv-gehalt % | Staubneigung % | Rieselfähigkeit cot Phi | Schüttdichte g/l | mittlere Teilchengröße d₅₀ µm |
| Vgl. | | - | - | 0 | 66 | 1,2 | 677 | 59 |
| 1 | 250 | Di-2-ethylhexylphthalat (DOP) | 0,4 | 0,05 | 60 | 1,4 | - | - |
| 2 | 250 | Di-2-ethylhexylphthalat (DOP) | 1 | 0,12 | 58 | 1,4 | 511 | |
| 3 | 250 | Di-2-ethylhexylphthalat (DOP) | 2 | 0,23 | 57 | 1,5 | - | - |
| 4 | 250 | Di-2-ethylhexylphthalat (DOP) | 10 | 1,06 | 56 | 1,7 | 466 | |
| 5 | 249,75 | Genapol 2822 | 0,25 | 0,1 | 40 | - | - | - |
| 6 | 247,5 | Genapol 2822 | 2,5 | 1 | 38 | 1,6 | 426 | - |
| 7 | 237,5 | Genapol 2822 | 12,5 | 5 | 35 | 1,3 | - | - |
| 8 | 225 | Genapol 2822 | 25 | 10 | 33 | 1 | 502 | - |
| 10 | 247,5 | Genapol 2822 | 2,5 | 1 | 35 | 1,5 | - | - |
| 12 | 2000 | Agrocer 09 (23%ig) | 200 | 2,20 | 27 | 1,6 | 389 | - |
| 13 | 2000 | Agrocer 09 (23%ig) | 400 | 4 | 25 | 1,5 | 413 | 13 |

| | | | | | | | | |
|---|---|---|---|---|---|---|---|---|
| *POF: Phosphororganische Flammschutzkomponente | | | | | | | | |

## Patentansprüche

1. Staubarme, pulverförmige Flammschutzmittelzusammensetzung aus einer phosphororganischen Flammschutzkomponente und mindestens einem Staubreduktionsadditiv.

2. Staubarme, pulverförmige Flammschutzmittelzusammensetzung nach Anspruch 1, **dadurch gekennzeichnet, dass** es sich bei der phosphororganischen Flammschutzkomponente um ein Phosphinsäuresalz der Formel (I) und/oder ein Diphosphinsäuresalz der Formel (II) und/oder deren Polymere (Komponente A) handelt, 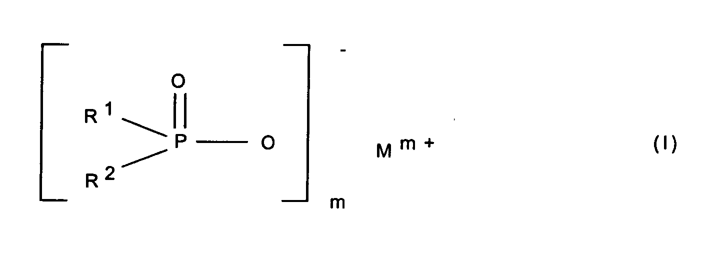 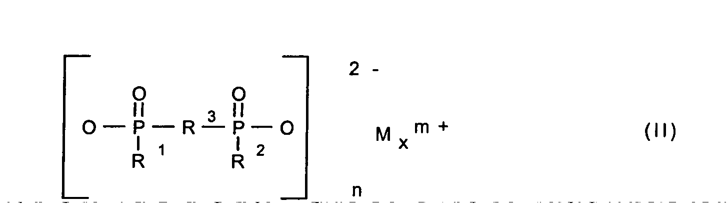 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder - Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten.

3. Staubarme, pulverförmige Flammschutzmittelzusammensetzung nach Anspruch 1 oder 2, **dadurch gekennzeichnet, dass** M Calcium, Aluminium oder Zink bedeutet.

4. Staubarme, pulverförmige Flammschutzmittelzusammensetzung nach einem oder mehreren der Ansprüche 1 bis 3, **dadurch gekennzeichnet, dass** R¹, R² gleich oder verschieden sind und C₁-C₆-Alkyl, linear oder verzweigt und/oder Phenyl bedeuten.

5. Staubarme, pulverförmige Flammschutzmittelzusammensetzung nach einem oder mehreren der Ansprüche 1 bis 4, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

6. Staubarme, pulverförmige Flammschutzmittelzusammensetzung nach einem oder mehreren der Ansprüche 1 bis 5, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

7. Staubarme, pulverförmige Flammschutzmittelzusammensetzung nach einem oder mehreren der Ansprüche 1 bis 6, **dadurch gekennzeichnet, dass** sie und/oder die phosphororganische Flammschutzkomponente weiterhin Melaminphosphat, Dimelaminphosphat, Melaminpyrophosphat, Melaminpolyphosphate, Melampolyphosphate, Melempolyphosphate und/oder Melonpolyphosphate enthält.

8. Staubarme, pulverförmige Flammschutzmittelzusammensetzung nach einem oder mehreren der Ansprüche 1 bis 7, **dadurch gekennzeichnet, dass** sie und/oder die phosphororganische Flammschutzkomponente weiterhin Melaminkondensationsprodukte wie Melam, Melem und/oder Melon enthalten.

9. Staubarme, pulverförmige Flammschutzmittelzusammensetzung nach einem oder mehreren der Ansprüche 1 bis 8, **dadurch gekennzeichnet, dass** sie und/oder die phosphororganische Flammschutzkomponente weiterhin oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin enthalten.

10. Staubarme, pulverförmige Flammschutzmittelzusammensetzung nach einem oder mehreren der Ansprüche 1 bis 9, **dadurch gekennzeichnet, dass** sie und/oder die phosphororganische Flammschutzkomponente stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, enthält.

11. Staubarme, pulverförmige Flammschutzmittelzusammensetzung nach einem oder mehreren der Ansprüche 1 bis 10, **dadurch gekennzeichnet, dass** sie und/oder die phosphororganische Flammschutzkomponente als Komponente B eine synthetische anorganische Verbindung und/oder ein mineralisches Produkt enthält.

12. Staubarme, pulverförmige Flammschutzmittelzusammensetzung nach einem oder mehreren der Ansprüche 1 bis 11, **dadurch gekennzeichnet, dass** es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

13. Staubarme, pulverförmige Flammschutzmittelzusammensetzung nach einem oder mehreren der Ansprüche 1 bis 12, **dadurch gekennzeichnet, dass** sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, - phosphat, -borat oder -sulfide; bei den Aluminiumverbindungen um Aluminiumhydroxid oder -phosphat handelt.

14. Staubarme, pulverförmige Flammschutzmittelzusammensetzung nach einem oder mehreren der Ansprüche 1 bis 13, **dadurch gekennzeichnet, dass** sie und/oder die phosphororganische Flammschutzkomponente als weitere Komponente C Stickstoffverbindungen enthält.

15. Staubarme, pulverförmige Flammschutzmittelzusammensetzung nach einem oder mehreren der Ansprüche 1 bis 14 **dadurch gekennzeichnet, dass** es sich bei den Stickstoffverbindungen um solche der Formeln (III) bis (VIII) oder Gemische davon 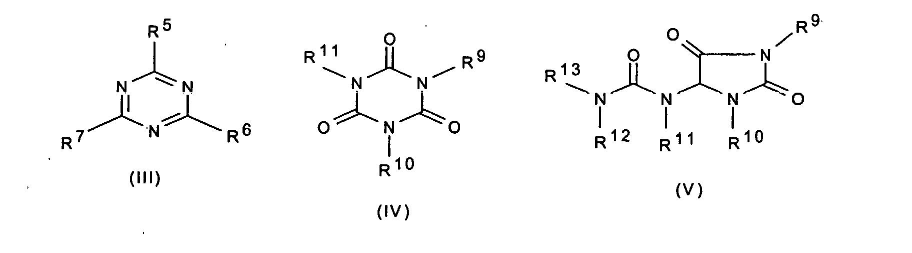 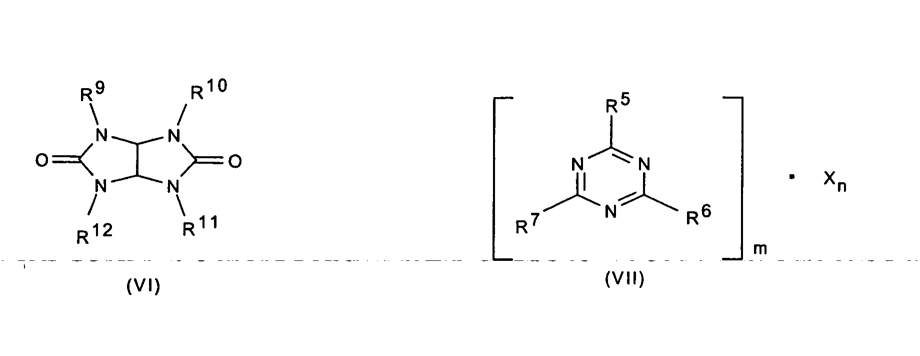 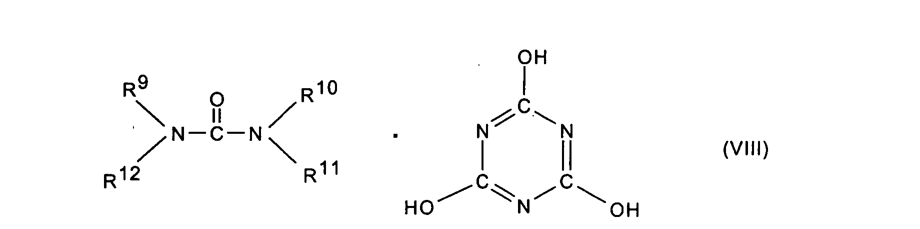 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und - N(R⁸)R⁹ , sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten.

16. Staubarme, pulverförmige Flammschutzmittelzusammensetzung nach einem oder mehreren der Ansprüche 1 bis 15, **dadurch gekennzeichnet, dass** sie und/oder die phosphororganische Flammschutzkomponente weiterhin Carbodiimide enthalten.

17. Staubarme, pulverförmige Flammschutzmittelzusammensetzung nach einem oder mehreren der Ansprüche 1 bis 16, **dadurch gekennzeichnet, dass** es sich bei dem Staubreduktionsadditiv um Alkylalkoxylate mit 8 bis 22 C-Atomen und 1 bis 80 EO-Einheiten pro Mol Alkohol handelt.

18. Staubarme, pulverförmige Flammschutzmittelzusammensetzung nach einem oder mehreren der Ansprüche 1 bis 16, **dadurch gekennzeichnet, dass** es sich bei dem Staubreduktionsadditiv um Paraffinöle und/oder Mineralöle mit Siedepunkten über ca. 360°C, Weichparaffin mit Schmelzpunkten von ca. 38 bis 60°C, Tafelparaffine mit Schmelzpunkten von ca. 60 bis 62°C und/oder chloriertes Paraffinöl, mit einem Chlorgehalt von 70 % und einer Viskosität von 1200 Centipoise, handelt.

19. Staubarme, pulverförmige Flammschutzmittelzusammensetzung nach einem oder mehreren der Ansprüche 1 bis 16, **dadurch gekennzeichnet, dass** es sich bei dem Staubreduktionsadditiv um Silikonöle mit Molekulargewichten von 1000 bis 150000 g/Mol und Viskositäten von 10 bis 1.000.000 mPas; um halogensubstitutierte Silicone oder funktionalisierte Silicone; um Methylphenylpolysiloxane oder copolymere Siloxane; um Rizinusöl, Glycerin, Di-2-ethylhexyl-phthalat oder Phthalsäurepolyester; um aromatische und aliphatische Phosphorsäureester sowie anionische Polyesterpolyurethane; um Ethylenglykol, Propylenglykol und/oder Butylenglykol, deren Oligomere und/oder Polymere und/oder deren Ether handelt.

20. Staubarme, pulverförmige Flammschutzmittelzusammensetzung nach einem oder mehreren der Ansprüche 1 bis 16, **dadurch gekennzeichnet, dass** es sich bei dem Staubreduktionsadditiv um natürliche, chemisch modifizierte und/oder synthetische Wachse; bevorzugt um Carnaubawachse und Montanwachse, handelt.

21. Staubarme, pulverförmige Flammschutzmittelzusammensetzung nach einem oder mehreren der Ansprüche 1 bis 20, **dadurch gekennzeichnet, dass** sie eine mittlere Teilchengröße von 0,1 bis 1000 µm, bevorzugt 1 bis 100 µm aufweisen.

22. Staubarme, pulverförmige Flammschutzmittelzusammensetzung nach einem oder mehreren der Ansprüche 1 bis 21, **dadurch gekennzeichnet, dass** sie eine mittlere Schüttdichte von 80 bis 800 g/l, bevorzugt 200 bis 700 g/l, aufweisen.

23. Staubarme, pulverförmige Flammschutzmittelzusammensetzung nach einem oder mehreren der Ansprüche 1 bis 22, **dadurch gekennzeichnet, dass** das Mengenverhältnis von Staubreduktionsadditiv zu phosphororganischer Flammschutzkomponente 1 zu 999 bis 1 zu 4, bevorzugt 1 bis 99 bis 1 zu 19 beträgt.

24. Verfahren zur Herstellung von staubarmen, pulverförmigen Flammschutzmittelzusammensetzungen nach mindestens einem der Ansprüche 1 bis 23, **dadurch gekennzeichnet, dass** man das Staubreduktionsadditiv in Wasser emulgiert und dann diese Emulsion zu einer wässrigen Suspension der phosphororganischen Flammschutzkomponente gibt und 0,1 bis 100 Stunden bei 20 bis 200°C rührt, den Feststoff abtrennt, mit Wasser wäscht und anschließend trocknet.

25. Verfahren zur Herstellung von staubarmen, pulverförmigen Flammschutzmittelzusammensetzungen nach mindestens einem der Ansprüche 1 bis 23, **dadurch gekennzeichnet, dass** man das Staubreduktionsadditiv in flüssiger Form in einem geeigneten Mischer zu der bewegten phosphororganischen Flammschutzkomponente gibt und 0,1 bis 100 Stunden bei 20 bis 200°C mischt und anschließend bei 20 bis 400°C trocknet.

26. Verfahren zur Herstellung von staubarmen, pulverförmigen Flammschutzmittelzusammensetzungen nach mindestens einem der Ansprüche 1 bis 23, **dadurch gekennzeichnet, dass** man das feste Staubreduktionsadditiv in einem geeigneten Mischer zu der bewegten phosphororganischen Flammschutzkomponente gibt, 0,1 bis 100 Stunden mischt und dabei bis zum Schmelzpunkt des Staubreduktionsadditivs erhitzt.

27. Flammgeschützte Polymerformmasse, **dadurch gekennzeichnet, dass** sie eine staubarme, pulverförmige Flammschutzmittelzusammensetzung nach mindestens einem der Ansprüche 1 bis 23 enthält.

28. Flammgeschützte Polymerformmasse nach Anspruch 27, **dadurch gekennzeichnet, dass** sie
1 bis 50 Gew.-% staubarme, pulverförmige Flammschutzmittelzusammensetzung,
1 bis 99 Gew.-% thermoplastisches Polymer oder Mischungen derselben
0 bis 60 Gew.-% Additive
0 bis 60 Gew.-% Füllstoff enthält.

29. Flammgeschützte Polymerformmasse nach Anspruch 27 oder 28, **dadurch gekennzeichnet, dass** sie
5 bis 30 Gew.-% staubarme, pulverförmige Flammschutzmittelzusammensetzung,
5 bis 90 Gew.-% thermoplastisches Polymer oder Mischungen derselben
5 bis 40 Gew.-% Additive
5 bis 40 Gew.-% Füllstoff enthält.

30. Flammgeschützte Polymerformmasse nach einem oder mehreren der Ansprüche 27 bis 29, **dadurch gekennzeichnet, dass** sie weiterhin Komponenten B und/oder C enthalten.

31. Flammgeschützte Polymerformmasse nach einem oder mehreren der Ansprüche 27 bis 30, **dadurch gekennzeichnet, dass** es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) handelt.

32. Flammgeschützte Polymerformmasse nach einem oder mehreren der Ansprüche 27 bis 31. **dadurch gekennzeichnet, dass** es sich bei den thermoplastischen Polymeren um Polyamid, Polyester oder ABS handelt.

33. Polymer-Formkörper, -Filme, -Fäden und -Fasern enthaltend eine staubarme, pulverförmige Flammschutzmittelzusammensetzung nach mindestens einem der Ansprüche 1 bis 23.

34. Polymer-Formkörper, -Filme, -Fäden und -Fasern nach Anspruch 33, **dadurch gekennzeichnet, dass** es sich bei dem Polymer um ein thermoplastisches oder duroplastisches Polymer handelt.

35. Polymer-Formkörper, -Filme, -Fäden und -Fasern nach Anspruch 33 oder 34, **dadurch gekennzeichnet, dass** es sich bei dem bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

36. Polymer-Formkörper, -Filme, -Fäden und -Fasern nach Anspruch 33 oder 34, **dadurch gekennzeichnet, dass** es sich bei den duroplastischen Polymeren um Formaldehyd-, Epoxid-, Melamin- Phenolharz-Polymere und/oder Polyurethane handelt.

37. Polymer-Formkörper, -Filme, -Fäden und -Fasern nach einem oder mehreren der Ansprüche 33 bis 36, **dadurch gekennzeichnet, dass** sie
1 bis 50 Gew.-% staubarme, pulverförmige Flammschutzmittelzusammensetzung,
1 bis 99 Gew.-% Polymer oder Mischungen derselben
0 bis 60 Gew.-% Additive
0 bis 60 Gew.-% Füllstoff enthalten.

38. Polymer-Formkörper, -Filme, -Fäden und -Fasern nach einem oder mehreren der Ansprüche 33 bis 37, **dadurch gekennzeichnet, dass** sie
5 bis 30 Gew.-% staubarme, pulverförmige Flammschutzmittelzusammensetzung,
5 bis 90 Gew.-% Polymer oder Mischungen derselben
5 bis 40 Gew.-% Additive
5 bis 40 Gew.-% Füllstoff enthalten.
